Europäisches Patentamt

European Patent Office

Office européen des brevets

(19)

(11) Publication number : **0 330 243 B1**

(12) **EUROPEAN PATENT SPECIFICATION**

(45) Date of publication of patent specification :
04.03.92 Bulletin 92/10

(51) Int. Cl.⁵ : **B23K 1/00**

(21) Application number : **89106107.9**

(22) Date of filing : **13.06.85**

(54) **Portable pump for desoldering purposes.**

(30) Priority : **02.07.84 US 627067**

(43) Date of publication of application :
**30.08.89 Bulletin 89/35**

(60) Publication number of the earlier application in
accordance with Art. 76 EPC : **0 170 377**

(45) Publication of the grant of the patent :
**04.03.92 Bulletin 92/10**

(84) Designated Contracting States :
**CH DE FR GB LI**

(56) References cited :
**FR-A- 2 440 805**
**US-A- 3 818 539**

(73) Proprietor : **EDSYN INCORPORATED**
**1598 Arminta Street**
**Van Nuys California 91406 (US)**

(72) Inventor : **Fortune, William S.**
**29866 Cuthbert Street**
**Malibu California 90265 (US)**
Inventor : **Dallons, Robert E.**
**6625 Tamarind Street**
**Agoura California 91301 (US)**

(74) Representative : **Hughes, Brian Patrick et al**
**Graham Watt & Co. Riverhead**
**Sevenoaks, Kent TN13 2BN (GB)**

EP 0 330 243 B1

Jouve, 18, rue Saint-Denis, 75001 PARIS

## Description

## BACKGROUND OF THE INVENTION

This invention relates generally to portable vacuum pumps and particularly to those suitable for desoldering purposes.

In FR-A1-2 440 805 is disclosed a vacuum pump in which a main spring biases a piston in a cylinder and a trigger is baised by an auxiliary spring to a position in which the piston is held against the bias of the main spring.

It is an object of the present invention to provide a simpler construction of vacuum pump with consequent advantages in reliability and easy of manufacture.

## SUMMARY OF THE INVENTION

The present invention is a portable vacuum pump for desoldering purposes, comprising a barrel, a tip assembly at one end of the barrel, a piston movable within the barrel from a cocked position adjacent the tip assembly to an uncocked position, a trigger housing at the other end of the barrel, a trigger in said housing, a shaft mounting the piston at one end and extending through the trigger to a loading knob at its other end, a spring engaging the loading knob to bias the piston to the uncocked position, the trigger being biased to move transversely of the shaft in a first direction to engage the shaft and thereby hold the piston in the cocked position characterised in that the spring extends between and acts on the loading knob and the trigger, means being provided on the trigger to cause the spring to bias the trigger in the first direction.

For a more detailed explanation of the instrument and its operation, reference is made to the following specification.

Embodiments of the present invention will now be described, by ways of example, with reference to the accompanying drawings, in which:-

Fig. 1 is a side elevational view of the instrument of the present invention;

Fig. 2 is an exploded view of the instrument of Fig. 1;

Fig. 3 is a partially exploded view, primarily of the barrel, plunger, and tip assembly, to show a modification thereof;

Fig. 4 is is a side elevational view of the plunger, the main spring, the loading knob, the trigger and the rear end of the plunger;

Fig. 5 is a partial view of the plunger of Fig. 4, showing a modification to facilitate securing it to the loading knob;

Fig. 6 is an exploded view of the loading knob with a modification for firmly securing the plunger thereto and including a screw;

Fig. 7 is a top plan view of the loading knob of Fig. 6;

Fig. 8 is a top plan view of the trigger;

Fig. 9 is a side elevational view of the trigger taken on line 9-9 of Fig. 8;

Fig. 10 is a sectional view of the main spring, the loading knob and the trigger, showing a modification thereof;

Fig. 11 is an enlarged sectional view of Fig. 10 to illustrate in greater detail the trigger and main spring;

Fig. 12 is a cross-sectional view of the barrel having an internal thread for the tip assembly;

Fig. 13 is an enlarged view of the tip of the tip assembly, with a tiplet;

Fig. 14 is an exploded view of the barrel and the tip assembly;

Fig. 15 is an enlarged view of the tip retainer as retained by the internal threads of the barrel and the end cap; and

Fig. 16 is a cross-sectional view of the barrel having an external thread for securing thereto the tip assembly.

## DESCRIPTION OF THE PREFERRED EMBODIMENTS

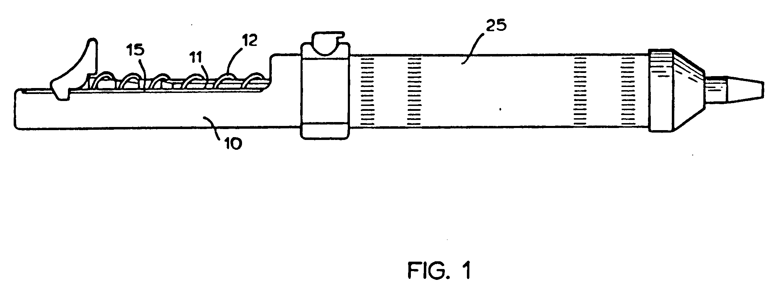

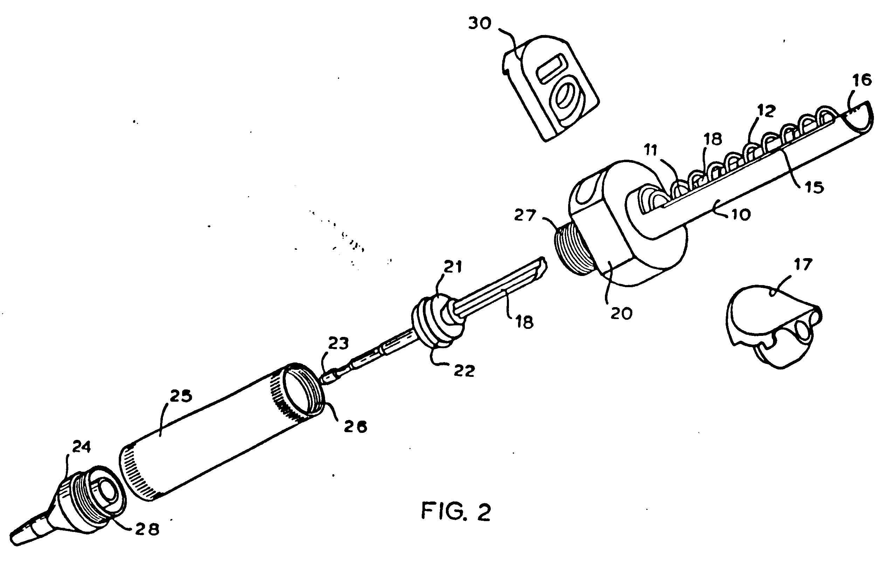

Referring now particularly to Figs. 1 and 2, there is illustrated an instrument in accordance with the present invention, having a trigger housing 20 with a rearward extension 10 which is open on one side, as shown at 11, and which houses the one and only compression spring 12 therein. As is clearly shown in Fig 1, the trigger housing extension 10 has an outwardly turned portion 15. It will be noted that a corresponding outwardly curved lip 16 is disposed on the opposite side. The loading knob 17 is securely fastened to the plunger shaft 18. The plunger shaft 18 continues beyond the trigger housing 20 and is provided with a plunger or piston 21. The plunger 21 has an internal groove 22 for holding and securing a suitable O-ring, or the like.

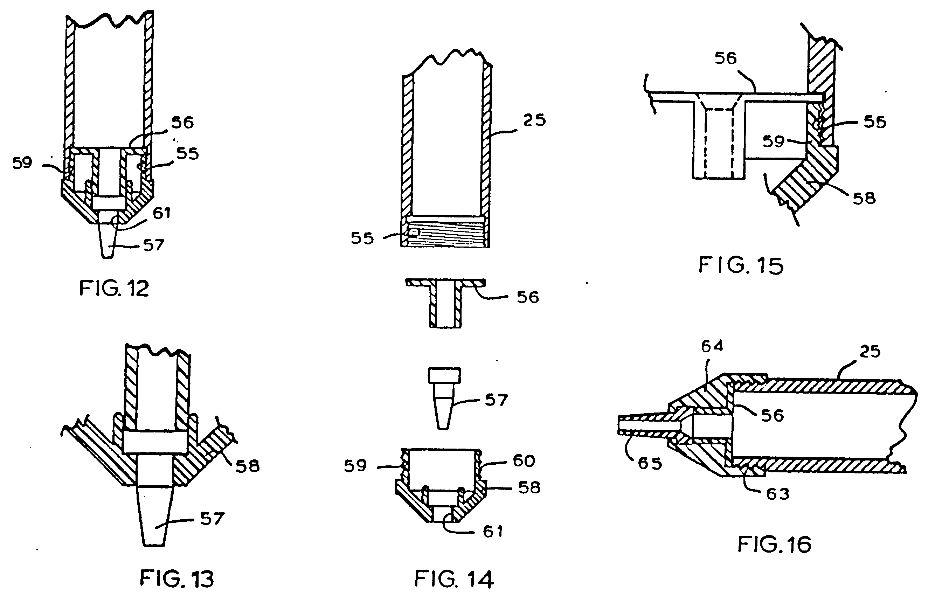

The outer end of the trigger shaft 18 is provided with a portion 23 which is adapted to extend through the tip assembly 24. A barrel 25, which may be made of metal or of plastic, has an internal screw thread 26 matching with an external screw thread 27 on the trigger housing 20. The details of the tip assembly 24 will be subsequently explained in connection with Figs. 12 to 15. The tip assembly 24 is provided with an external thread 28 which meshes a corresponding internal thread of the barrel 25.

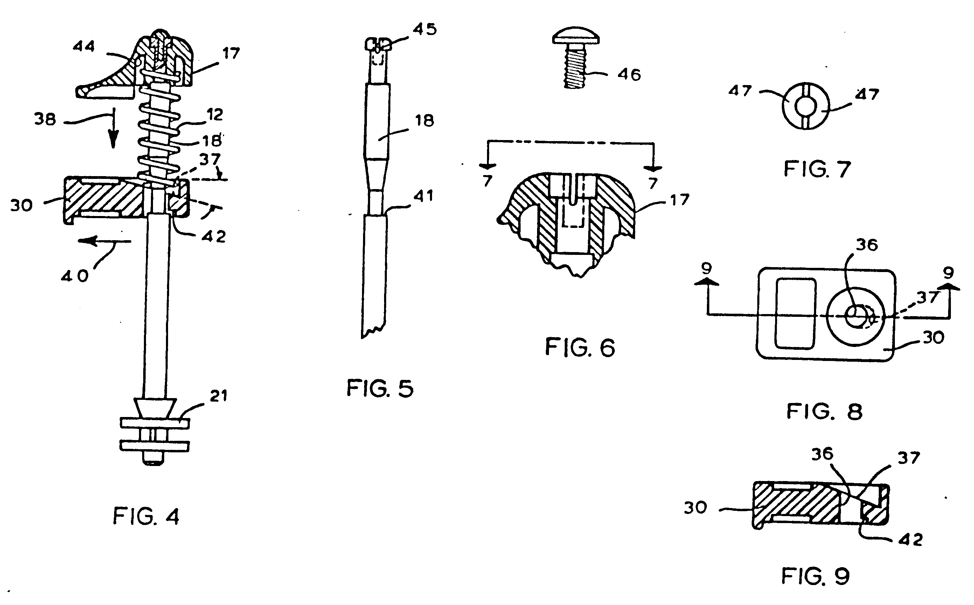

The trigger 30 will be more fully explained in connection with Figs. 4, 8 and 9.

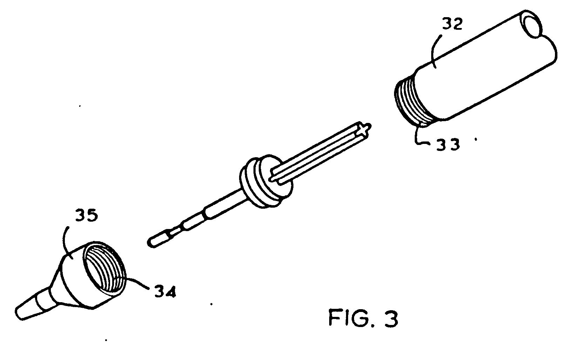

Instead of providing the barrel 25 with internal threads, it is also feasible to provide a barrel 32 with external threads 33 which, in turn, mesh with internal threads 34 of a tip assembly 35 as shown in Fig. 3.

The advantages of this construction will be subsequently explained.

Turning now to Figs. 4, 8 and 9, the detailed construction of the trigger 30 will now be explained. The trigger 30 has a cylindrical opening 36 for the trigger shaft 18 to pass through. However, as will be clearly seen in Figs. 8 and 9, the trigger 30 is provided with an inclined plane 37, also shown particularly in Fig. 4. Thus, as pressure is exerted on the loading knob 17 and consequently on the spring 12 in the direction of vertical arrow 38, the trigger 30 has a tendency to move sideways, as shown by the arrow 40. This in turn, means that when the shaft 18 has moved forwards in the barrel 25 to the point where the shoulders 41 and 42 are aligned the shoulder 41 of the trigger shaft 18 will be engaged by the shoulder 42 of the trigger as the trigger moves in the direction of the arrow 40, hence locking the instrument.

Thus, movement of the trigger 30 in the direction opposite to the direction of the arrow 40 will disengage the shoulder 41 of the trigger shaft 18 from the shoulder shaft 42 and the spring 12 acting on the loading knob 17 will move the plunger 21 in the barrel 25 away from the tip assembly, thus creating a vacuum. In this case it should be noted that if the barrel 32 is provided with exterior threads 33, as shown in Fig. 3, the entire interior space of the barrel is unobstructed and the plunger 21 can provide a more complete vacuum.

The stroke of the instrument may readily be adjusted by changing the spring 12 and by making it shorter or longer. The loading knob 17 may be provided with an interior ring-shaped recess 44 to provide more space for the upper windings of the spring 12.

It is generally desirable to secure the plunger 18 securely to the loading knob 17, and this can be accomplished as shown in Figs. 5 and 6. Here the head of the plunger shaft 18 is split, as shown at 45, and the assembly of the loading knob 17 can be secured by screw 46 to provide a firm but releasable connection. The two positions of the head of the plunger shaft 45 are shown in Fig. 7 at 47.

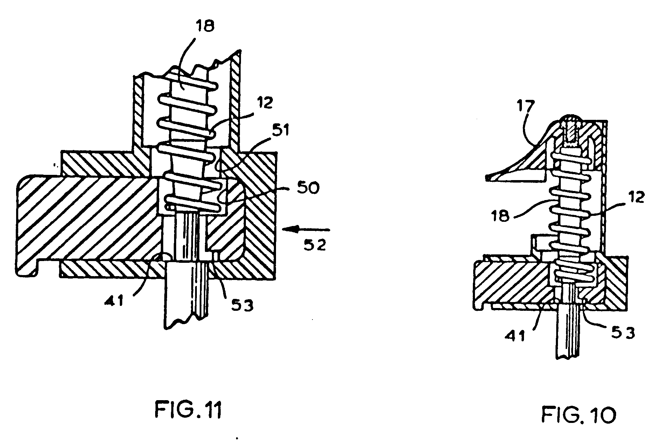

Figs. 10 and 11, to which reference is now made, show a modification of the trigger arrangement which will move the trigger plate sideways in a different manner. This is accomplished by disposing the outer end of the main spring 12 in a cylindrical space 50 which, however, is eccentrically disposed with respect to cylindrical space 51 directly above. Therefore, when pressure is exerted on the spring 12 by the loading knob 17, the spring has a tendency to move toward the left, in the direction of arrow 52, which in turn will lock the trigger housing, because the shoulder 41 of the plunger 18 will engage shoulder 53 to lock the trigger housing.

It should be noted, however, that the embodiment shown in Figs. 4 to 9 is preferred.

Referring now to Figs. 12 to 15, there is illustrated in some detail how the tip assembly may be secured to the barrel 25. The barrel 25 again has an interior thread 55 to which is secured the tip assembly. There is provided a retainer disk 56, the horizontal flat portion of which engages the internal threads 55. The teflon tiplet is shown at 57 and extends through the tip housing 58 having exterior threads 60. The tip housing abuts against the retainer disk 56, while the teflon tiplet extends through the lower opening 61 of the tip assembly. This is clearly shown in Fig. 15 where the retainer disk 56 meshes the threads 55. They are backed by a portion 59 of the tip housing 58.

Fig. 13 shows the tiplet 57 extending through the tip housing 58. The entire assembly is shown in Fig. 12. It will be noted that with the construction shown in Figs. 12 to 15, the tiplet may readily be exchanged.

Fig. 16, to which reference is now made, shows a barrel 25 with external threads 63. As a result, the entire tip assembly 64 is held by the threads 63 and, in turn, projects the tiplet 65. As can be clearly seen in Fig. 16, this construction keeps the interior space of the barrel 25 entirely free. The retainer disk 56 provides a support for the tip assembly 64.

A brief summary of the advantages of the present invention over the prior art will now be given. Thus, it will be apparent that no return spring is required to hold the trigger in the latched position. The more tension is applied vertically against the single spring, the more force is applied horizontally to the trigger, to secure a better lock up against the plunger shaft.

Another substantial advantage is the fact that the assembly is exceedingly simple, because all parts can be assembled in a straight line; that is, along a longitudinal axis. This, in turn, means that the instrument may be shipped in disassembled form, thus reducing handling and shipping costs.

Furthermore, the single spring is mounted above the barrel where it would normally be disposed. The single trigger keeps the spring end out of the barrel, which means that it is not in contact with the soldering debris. This, in turn, allows more space for the plunger and a longer stroke, which results in a higher vacuum.

The loading of the instrument is made much simpler because the loading knob can be pushed, for example, against the edge of a work bench, using one hand. Alternatively, it is feasible to provide a short barrel holder for cocking the instrument. This is particularly advantageous for repeated operations.

Furthermore, the instrument requires a minimum of parts, including a floating plunger shaft which may be extra long but which does not impact any solid stop, or the like, during its operation. Due to the method of guiding the loading knob, the plunger shaft cannot be accidentally bent.

The spring may be safely secured to the loading knob to provide for easy assembly and for easy changing.

The loading knob is shaped to seat the edge of the spring guide for loading. It can be readily remounted to change the spring tension.

The shaft and plunger form basically a single piece and require no other assembly than the loading knob. The trigger housing and spring guide is a single piece.

The plunger shaft will float; that is, it can discharge without coming into contact with any possible stop which might cause a kickback of the instrument.

The spring itself is of a simple design requiring no special hooks. The spring is simply installed between the locking knob and the top of the trigger.

## Claims

1. A portable vacuum pump for desoldering purposes, comprising a barrel (25), a tip assembly (24) at one end of the barrel (25), a piston (21) movable within the barrel (25) from a cocked position adjacent the tip assembly to an uncocked position, a trigger housing (10) at the other end of the barrel, a trigger (30) in said housing (10) a shaft (18) mounting the piston (21) at one end and extending through the trigger to a loading knob (17) at its other end, a spring (12) engaging the loading knob (17) to bias the piston to the uncocked position, the trigger (30) being biased to move transversely of the shaft (18) in a first direction to engage the shaft and thereby hold the piston (21) in the cocked position characterised in that the spring (12) extends between and acts on the loading knob (17) and the trigger (30), means (37) being provided on the trigger (30) to cause the spring (12) to bias the trigger (30) in the first direction.

2. A pump as claimed in claim 1, characterised in that the means provided on said trigger (30) is a recessed portion and a face (37) for seating said spring (12), said face (37) being inclined to the normal to the spring axis.

3. A pump as claimed in claim 1, characterised in that said spring (12) engages a recess in said trigger (30), said recess being offset from the main axis of said trigger housing.

## Patentansprüche

1. Tragbare Vakuumpumpe zum Entlöten, bestehend aus einem Zylinder (25), einer Spitzeneinheit (24) an einem Ende des Zylinders (25), einem innerhalb des Zylinders (25) aus einer an die Spitzeneinheit angrenzenden gespannten Stellung in eine ungespannte Stellung bewegbaren Kolben (21), einem Auslösergehäuse (10) am anderen Ende des Zylinders, einem Auslöser (30) im Gehäuse (10), einem Schaft (18), an dem der Kolben (21) an einem Ende aungebracht ist und der sich durch den Auslöser zu einem Spannknopf (17) an seinem anderen Ende erstreckt, und einer am Spannknopf (17) angreifenden Feder (12) zum Beaufschlagen des Kolbens in Richtung der ungespannten Stellung, wobei der Auslöser (30) für eine Bewegung quer zum Schaft (18) in einer ersten Richtung für einen Eingriff mit dem Schaft und dadurch zum Halten des Kolbens (21) in der gespannten Stellung beaufschlagt ist, dadurch gekennzeichnet, daß sich die Feder (12) zwischen dem Spannknopf und dem Auslöser (30) erstreckt und auf diese wirkt und eine Einrichtung (37) am Auslöser (30) vorgesehen ist, um die Feder (12) den Auslöser (30) in der ersten Richtung beaufschlagen zu lassen.

2. Pumpe nach Anspruch 1, dadurch gekennzeichnet, daß die am Auslöser (30) vorgesehenen Einrichtung ein ausgenommener Bereich und eine Fläche (37) für einen Sitz der Feder (12) ist und die Fläche (37) zu der Senkrechten zur Federachse geneigt ist.

3. Pumpe nach Anspruch 1, dadurch gekennzeichnet, daß die Feder (12) mit einer Ausnehmung im Auslöser (30) in Eingriff steht und die Ausnehmung aus der Hauptachse des Auslösergehäuses versetzt ist.

## Revendications

1. Pompe à vide portable destinée au désoudage, comprenant un cylindre (25), un ensemble de pointe (24) à une extrémité du cylindre (25), un piston (21) mobile dans le cylindre (25), à partir d'une position armée voisine de l'ensemble de pointe jusqu'à une position désarmée, un boîtier de gâchette (10) à l'autre extrémité du cylindre, une gâchette (30) logée dans ce boîtier (10), une tige (18) sur une partie extrême de laquelle est monté le piston (21) et dont l'autre partie extrême s'étend à travers la gâchette jusqu'à un bouton de chargement (17), un ressort (12) en contact avec le bouton de chargement (17) afin de solliciter le piston en direction de sa position désarmée, la gâchette (30) étant sollicitée de manière à se déplacer transversalement par rapport à la tige (18), dans une première direction, afin de venir en contact avec la tige de piston et de maintenir ainsi le piston (21) en position armée, caractérisé en ce que le ressort (12) s'étend et agit entre le bouton de chargement (17) et la gâchette (10), un moyen (37) étant prévu sur la gâchette (30) pour amener le ressort (12) à solliciter la gâchette (30) dans la première direction.

2. Pompe suivant la revendication 1 caractérisée en ce que le moyen prévu sur la gâchette (30) est une portion en creux et une face (37) d'appui pour le ressort (12), cette face (37) étant inclinée par rapport à la perpendiculaire à l'axe du ressort.

3. Pompe suivant la revendication 1 caractérisée en ce que le ressort (12) est engagé dans un creux de la gâchette (30), ce creux étant décalé par rapport à l'axe principal du boîtier de gâchette.

FIG. 1

FIG. 2

FIG. 3

EP 0 330 243 B1

44
17
38
12
18
37
30
42
40
21

**FIG. 4**

45
18
41

**FIG. 5**

46

7 7
17

**FIG. 6**

47 47

**FIG. 7**

36
9 9
37
30

**FIG. 8**

36 37
30
42

**FIG. 9**

8

FIG.10

FIG.11

FIG.15

FIG.16

FIG.14

FIG.12

FIG.13